# EUROPÄISCHE PATENTSCHRIFT

(11) **EP 2 055 207 B1**
(45) Veröffentlichungstag und Bekanntmachung des Hinweises auf die Patenterteilung: **22.12.2010**
(21) Anmeldenummer: 08168083.7
(22) Anmeldetag: 31.10.2008
(51) Int. Cl.: A47B 87/00, F16B 12/10, F16B 12/22, F16B 12/34

(54) **Verbindungsvorrichtung zum lösbaren Verbinden von zwei Elementen in Gestalt von Küchenabdeckungen mit Kochapparaten oder von Kochapparaten untereinander**
Connecting device for reversibly connecting two elements in the form of kitchen surfaces with cooking appliances or of cooking appliances under one another
Dispositif de liaison destiné à la liaison amovible de deux éléments sous la forme de couvercles de cuisine dotés d'appareils de cuisson ou d'appareils de cuisson reliés

(30) Priorität: 02.11.2007 CH 17032007
(43) Veröffentlichungstag der Anmeldung: 06.05.2009
(73) Patentinhaber: Elro (Holding ) AG, 5620 Bremgarten (CH)
(72) Erfinder: Birchmeier, Urs, 5525, Fischbach-Göslikon (CH)
(74) Vertreter: Liebetanz, Michael

(56) Entgegenhaltungen:
- EP-A- 0 121 915
- EP-A- 0 430 921
- DE-A1- 19 835 140
- DE-C1- 4 228 076
- GB-A- 859 484
- JP-A- 1 008 916
- JP-A- 9 328 951
- US-A- 6 158 915

## Beschreibung

### Technisches Gebiet der Erfindung

Die vorliegende Erfindung betrifft eine Verbindungsvorrichtung zur Verbindung von zwei Elementen in Gestalt von Küchenabdeckungen mit Kochapparaten oder von Kochapparaten untereinander gemäss den Merkmalen des Oberbegriffs des Anspruchs 1.

### Stand der Technik

Im Gebiet des Küchenbaus werden beispielsweise Küchenabdeckungen und/oder Kochapparate zu kompakten Kochblöcken oder Kochinseln zusammengefügt. Küchenabdeckungen dienen zur Überdeckung von so genannten Unterbauten, welche beispielsweise Schubladen, Schränke, Karusselle, Auszüge etc, beinhalten.

Beim Zusammenfügen von einzelnen Kochapparaten und/oder einzelnen Kücheabdeckungsteilen ergibt sich zwischen den einzelnen Teilen typischerweise ein Spalt oder eine Fuge. Üblicherweise wird ein Verbindungselement oder eine Verbindungsvorrichtung mit Bereich des Spaltes angeordnet, um die entsprechenden Kochapparate bzw. Kücheabdeckungen miteinander zu verbinden wie zum Beispiel in DE 198 35 140 A dargestellt. Um hygienischen Anforderungen gerecht zu werden, muss dieser Spalt gegenüber Flüssigkeiten und Feststoffen abgedichtet werden. Ansonsten könnten Flüssigkeiten oder Feststoffe in die Unterbauten gelangen, welche nicht einfach zu reinigen sind.

Aus dem Stand der Technik sind Verbindungselemente oder Verbindungsvorrichtungen bekannt, welche zur Abdeckung von solchen Spalten oder Fugen geeignet sind. Jedoch weisen bekannte Verbindungselemente den Nachteil auf, dass diese meist einen grossen überstehenden Aufbau aufweisen. Das heisst, dass sich die Verbindungselemente relativ hoch über die Kochapparate bzw. die Küchenabdeckung erstrecken. Dabei entsteht zwischen dem Verbindungselement und der Abdeckung eine Fuge, welche sich nicht besonders gut reinigen lässt. Ferner schränkt dies den Komfort des Benutzers ein.

Zudem gibt es Verbindungselemente, welche sich in den Unterbau erstrecken, wobei das Verbindungselement ebenfalls von der Abdeckungsplatte versetzt ist. Hierbei entsteht ebenfalls ein Fuge, welche die oben schon genannten Nachteile mit sich bringt.

Alternativ ist man auch dazu übergegangen, die einzelnen Elemente zu verschweissen, um so einen ebenen Übergang zwischen den einzelnen Elementen zu erreichen. Dabei wird beispielsweise ein Kochapparat mit Abdeckplatten oder mit einem anderen Kochapparate verschweisst. Dies stellt zwar eine dichte und gut zu reinigende Verbindung bereit, hat aber den Nachteil, dass sich die einzelnen Kochapparate bzw. Abdeckungen beispielsweise im Falle eines Defekts nur mit grossem Aufwand voneinander trennen lassen.

Ferner ist eine Lösung bekannt, bei der mit einer Spanneinrichtung die Stossnaht zweier Abdeckungen zusammengezogen wird. Aufgrund der unterschiedlichen thermischen Ausdehnungen der Apparateabdeckungen ist diese Lösung in Praxis wenig dauerhaft und kann insbesondere undicht werden.

### Darstellung der Erfindung

Ausgehend von diesem Stand der Technik liegt der Erfindung die Aufgabe zugrunde, eine Verbindungsvorrichtung zur Verbindung von Küchenabdeckungen mit Kochapparaten oder Kochapparaten untereinander zu schaffen, welche die Nachteile des Standes der Technik überwindet. Insbesondere soll eine Verbindungsvorrichtung angegeben werden, welche in einfacher Art und Weise wieder lösbar ist. Ferner soll die Verbindung grösstmögliche Dichtungseigenschaften aufweisen, so dass hygienischen Kriterien Rechnung getragen wird.

Diese Aufgabe löst eine Verbindungsvorrichtung mit den Merkmalen des Patentanspruchs 1. Vorteilhafte Ausgestaltungen der Erfindung sind in den abhängigen Ansprüchen angegeben.

Weitere vorteilhafte Ausführungsformen sind in den Unteransprüchen gekennzeichnet.

### Kurze Beschreibung der Zeichnung

Bevorzugte Ausführungsformen werden im folgenden anhand der Zeichnung beispielhaft näher beschrieben. Es zeigen:
- Fig. 1: eine perspektivische Ansicht einer Verbindungsvorrichtung gemäss der vor- liegenden Erfindung;
- Fig. 2: eine Vorderansicht der Verbindungsvorrichtung gemäss Figur 1;
- Fig. 3: eine Detailansicht der Verbindungsvorrichtung gemäss Figur 1; und
- Fig. 4: eine schematische Seitenansicht der Fig. 1.

### Beschreibung von bevorzugten Ausführungsbeispielen

Mit Bezug zu den Zeichnungen werden mögliche Ausführungsbeispiele beschrieben. Die Zeichnungen und die Beschreibung zeigen bevorzugte Ausführungsbeispiele und sollten nicht ausgelegt werden, um die Erfindung einzuschränken, welche durch die Ansprüche definiert ist.

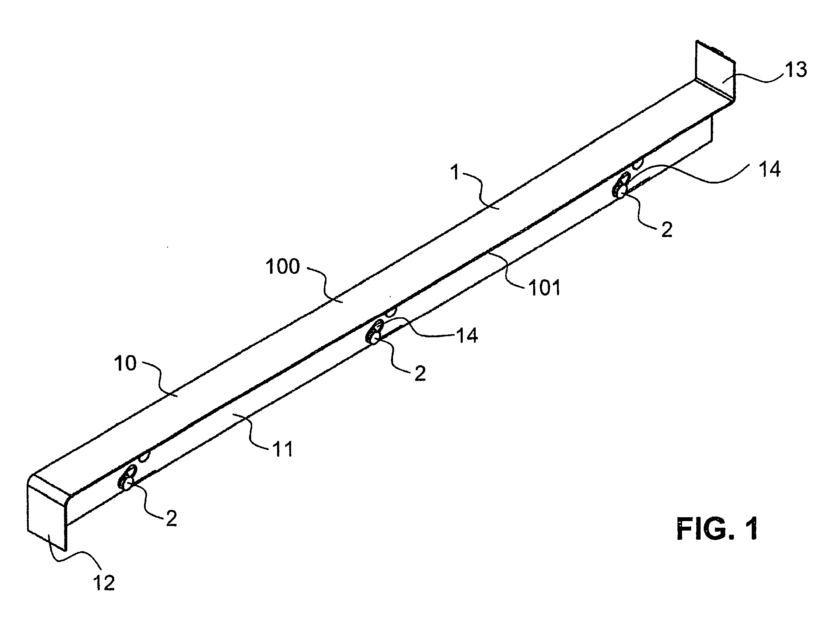

Die Fig. 1 zeigt eine perspektivische Ansicht einer Verbindungsvorrichtung gemäss der vorliegenden Erfindung. Die Verbindungsvorrichtung umfasst ein Verbindungselement 1 und mindestens ein, hier drei, Spannelemente 2. Die erfindungsgemässe Verbindungsvorrichtung dient zum lösbaren Verbinden eines ersten Elements 4 mit einem daneben angeordneten zweiten Element 5, wobei der Abstand der aufeinander zugewandeten Seitenwände 41 und 51 kleiner als die Breite des Abdeckschenkels 10 der Verbindungsvorrichtung ist. Die beiden Elemente 4, 5 sind beispielsweise ein Kochapparat (Kochherd etc.) oder eine Küchenabdeckung bzw. eine Abdeckplatte. Die Verbindungsvorrichtung dient demnach der Verbindung eines Kochapparates mit einer Kücheabdeckung oder der Verbindung zwischen zwei Küchenabdeckungen bzw. zwei Kochapparaten. Nachfolgend wird die Ausdrucksweise erstes Element und zweites Element zwecks der besseren Lesbarkeit verwendet. Beide Ausdrücke schliessen im Sinne der vorliegenden Erfindung jegliche Kochapparate und Abdeckelemente ein. Kochapparate können sein: Pfannen, Grilleinheiten, Brassièren und Seitenkonsolen bei kippbaren Geräten.

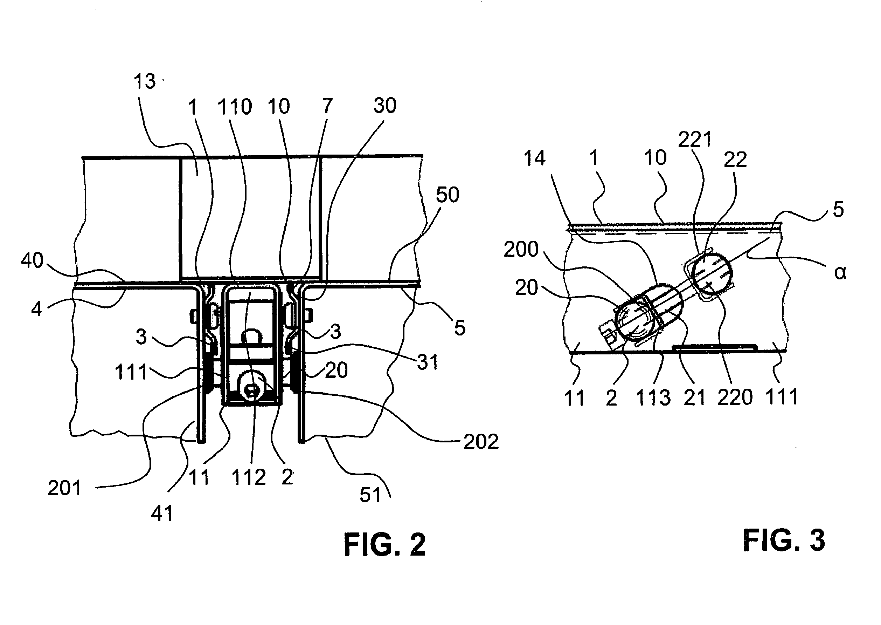

Das Verbindungselement 1 umfasst einen Abdeckschenkel 10 und einen zwei Seitenschenkel 111 aufweisenden Klemmschenkel 11. Diese Seitenschenkel 111 des Klemmschenkels 11 stehen von der Unterseite des Abdeckschenkels 10 vorzugsweise senkrecht ab. Im eingebauten Zustand zwischen einem ersten Element 4 und einem zweiten Element 5, welche insbesondere in der Figur 2 erkennbar sind, kommt der Klemmschenkel 11 zwischen das erste Elemente 4 und das zweite Element 5 zu liegen. Das heisst mit anderen Worten, dass im eingebauten Zustand nur die Oberseite 100 des Abdeckschenkels 10 und die Oberflächen des ersten und des zweiten Elementes sichtbar sind, nicht aber der Klemmschenkel 11.

Im vorliegenden Ausführungsbeispiel umfasst der Abdeckschenkel 10 an seinem vorderen und hinteren Ende einen optionalen hinteren Blendenschenkel 12 und einen vorderen Blendenschenkel 13. Die beiden Blendenschenkel 12, 13 sorgen für eine optisch ansprechende Gestaltung des entsprechenden Übergangsbereiches und sorgen zudem für eine Abdichtung in diesem Bereich. Hier ist der hintere Blendenschenkel 12 derart angeordnet, dass er sich von der Oberseite 100 nach oben erstreckt, wobei sich der vordere Blendenschenkel 13 nach unten erstreckt. Der hinteren Blendenschenkel 12 eignet sich demnach besonders gut, wenn das erste Element 4 und das zweite Element 5 an einer Wand anstehen. Alternativ könnte auch der hintere Blendenschenkel 12 nach unten ausgerichtet sein. Der vordere nach unten ausgerichtete Blendenschenkel 13 bildet den Abschluss der erfindungsgemässen Vorrichtung auf der vorderen Stirnseite der beiden Elemente 4, 5.

Wie in der Fig. 1 erkannt werden kann, liegen die Spannelemente 2 bewegbar in einer Nut 14, welche im Klemmschenkel 11 angeordnet ist. Durch ein Verschieben der Spannelement 2 in der Nut 14 relativ zum Verbindungselement 1 kann die erfindungsgemässen Verbindungsvorrichtung gegenüber den beiden Elementen 4, 5 verspannt werden.

Fig. 2 zeigt eine Vorderansicht der erfindungsgemässen Verbindungsvorrichtung mit dem Verbindungselement 1 und dem Spannelement 2. Zusätzlich zur Verbindungsvorrichtung werden hier auch das erste Element 4 und das zweite Element 5 ausschnittsweise dargestellt. Wie oben schon erwähnt dient die erfindungsgemäss Verbindungsvorrichtung der Verbindung des ersten Elementes 4 mit dem zweiten Element 5. Die Anforderungen an solch eine Verbindungsvorrichtung sind vielfältig. Beispielsweise soll eine solche Verbindungsvorrichtung gegenüber Flüssigkeiten dicht ausgestaltet sein, so dass keine Flüssigkeit in den Zwischenraum zwischen dem ersten Element 4 und dem zweiten Element 5 gelangen kann. Ferner soll die Verbindungsvorrichtung derart ausgebildet sein, dass Wärmedehnungen kompensiert werden können. Zudem soll die Verbindungsvorrichtung einfach zu reinigen sein. Im Falle eines Austausches eines der beiden Elemente soll die Verbindungsvorrichtung in einfacher Art und Weise zu lösen sein.

Die Fig. 2 zeigt auch den Aufbau des erfindungsgemässen Verbindungselementes 1, sowie dem Spannelement 2. Wie oben schon erwähnt umfasst das Verbindungselement 1 einen Abdeckschenkel 10 und einen Spannschenkel 11. Der Abdeckschenkel 10 ist im Wesentlichen als flächiges Element, insbesondere ein Blech, ausgebildet. Der Abdeckschenkel 10 weist eine Oberseite 100 und eine Unterseite 101 auf. Dabei liegt der Abdeckschenkel 10 mit der Unterseite auf den Oberflächen 30, 40 des ersten Elementes 4 bzw. des zweiten Elementes 5 auf. An der Unterseite 101 des Abdeckschenkels 10 ist der Klemmschenkel 11 befestigt bzw. angeformt.

Aufgrund der Anordnung eines Spannschenkels 11, welcher das Spannelement 2 lagert, kann die erfindungsgemässe Verbindungsvorrichtung bezüglich der Breite besonders kompakt ausgebildet werden. Das heisst mit anderen Worten, dass der Abstand zwischen dem ersten Element 4 und dem zweiten Element 5 minimiert werden kann. Ein weiterer Vorteil ergeht aus der Tatsache, dass der Abdeckschenkel 10 sehr dünn ausgestaltet werden kann. Dabei entsteht ein besonders vorteilhafter Übergang zwischen dem ersten Element 4 und dem zweiten Element 5.

Der Klemmschenkel 11 ist im wesentlichen U-förmig ausgebildet und umfasst einen Grundschenkel 110 und zwei davon abstehende Seitenschenkel 111. Der Grundschenkel 110 ist auf der Unterseite 101 des Abdeckschenkels 10 mit diesem verbunden. Im Zwischenraum 112 zwischen den beiden Seitenschenkeln 111 ist das Spannelement 2 angeordnet.

Das Spannelement 2 umfasst im Wesentlichen ein Klemmelement 20, eine Spannschraube 21, und einen Bolzen 22. Der Bolzen 22 weist eine Öffnung 200 mit einem Gewinde auf, in welches die Spannschraube 21 eingreift. Das Klemmelement 20 weist eine Öffnung 200 ohne Gewinde auf, durch welche die Spannschraube 21 hindurchgeführt werden kann. D heisst, das Klemmelement 20 ist zwischen Schraubenkopf der Spannschraube 21 und Bolzen 22 angeordnet. Insbesondere liegt das Klemmelement 20 auf dem Schraubenkopf der Spannschraube 21 auf. Durch Drehen der Spannschraube 21 verringert sich die Distanz zwischen Klemmelement 20 und Bolzen 22. Dies kann insbesondere auch in Fig. 3 gut erkannt werden. Die Spannschraube 21 erlaubt ein stufenloses festziehen der erfindungsgemässen Verbindungsvorrichtung.

Das Klemmelement 20 wird in Nuten 14, wovon je eine in den Seitenschenkeln 111 angeordnet ist, geführt. Dabei stehen Teile, welche auch als freie Enden 201 bezeichnet werden können, des Klemmelementes 20 über die beiden Seitenschenkel 111 seitlich hervor. Ferner ist das Klemmelement 20 in den Nuten 14 beweglich geführt, wobei die Bewegung durch Drehen der Spannschraube 21 hervorgerufen wird.

In der dargestellten beispielhaften Ausführung ist der Bolzen nur lose geführt, die entsprechenden Bohrungen der Schiene 11 dienen als Widerlager für den seitlich einzuführenden Bolzen 22. Auf dem eingelegten Bolzen 22 ist ein U-Profil 221 klemmend befestigt. Andere Verbindungsarten sind ebenfalls denkbar. Der Bolzen 22 kann im wesentlichen mit den beiden Seitenschenkeln 11 bewegungsfest eingelassen sein. Beispielsweise ist es auch denkbar, den Bolzen 22 durch zwei in den Seitenschenkeln 111 angeordneten Öffnungen hindurchzuführen und zu sichern, beispielsweise durch eine Schweissverbindung.

Damit die Spannschraube 21 mittig zwischen den Seitenschenkeln 111 verbleibt, ist das U-Führungsprofil 221 vorgesehen, welches mit einer mittigen Bohrung am Ort des Gewindes des Bolzens 22 an diesem Ort die Spannschraube 21 mittig hält. Ferner ist auf dem Klemmelement 20 ein weiteres U-Führungsprofil 113 klemmend befestigt, welches eine mittige Bohrung am Ort der Bohrung des Klemmelementes 20 aufweist. Dabei ist der Boden des U-Führungsprofils 113 in Richtung des Bolzens 22 angeordnet, um ein Setzen bei Anziehen der Schraube 21 zu verhindern.

Wie in der Fig. 3 erkannt werden kann, ist die Nut 14 winklig zur Oberseite 10 beziehungsweise zu den Seitenschenkeln 111 angebracht. Der Winkel ist mit dem Bezugszeichen α bezeichnet. Die winklige Anordnung ist vorteilhaft, denn der Benutzer kann mit einem entsprechenden Werkzeug die erfindungsgemässe Verbindungsvorrichtung beziehungsweise die Spannschraube 21 gut von vorne bzw. von unten betätigen. Vorzugsweise ist α zwischen 25° und 65°. Besonders bevorzugt zwischen 30° und 60°. Ein Winkel von 45° ist weiterhin vorteilhaft, denn dadurch wird eine gute Zugänglichkeit geschaffen und die Kraftverhältnisse beim Verspannen sind optimal.

Zwei Profilschienen 3, welche an der Seitenwand 41 des ersten Elementes 4 und an der Seitenwand 51 des zweiten Elementes 5 befestigt sind, dienen als Anschlag für die hervorstehenden Teile des Klemmelementes 20. Die Profilschienen 3 werden mittels Befestigungsmitteln 6, hier Schrauben, jeweils mit dem ersten Element 4 und dem zweiten Element 5 befestigt. Es ist natürlich auch eine Befestigung durch Schweissen oder eine andere Technik möglich. Durch Drehen der Spannschraube 21 wird die Distanz zwischen Bolzen 22 und Klemmelement 20 verringert oder vergrössert. Im Falle einer Verringerung bewegen sich die freien Enden 201 des Klemmelementes 20 von unten nach oben und können an den Profilschienen 3 anstehen. Da die Unterseite des Abdeckschenkels 10 auf der Oberseite 40, 50 des ersten Elementes 4 beziehungsweise des zweiten Elementes 5 aufliegt und das Klemmelement 20 an den Profilschienen 3 ansteht, kann bei einer Verringerung die erfindungsgemässe Verbindungsvorrichtung gegenüber dem ersten Element 4 und dem zweiten Element 5 verspannt werden.

Die Profilschienen 3 sind im wesentlichen flach ausgestaltet. Zudem weist jede Profilschiene mindestens einen nach unten abgebogenen Schenkel 31 auf, welcher sich über den Querschnitt der flachen Profilschiene 3 erstreckt. Im vorliegenden Ausführungsbeispiel erstreckt sich in Längsrichtung gesehen je ein abgebogener Schenkel 30, 31 von der linken Seite und der rechten Seite der Profilschiene nach oben und nach unten.

Der abgebogene Schenkel 30, welcher sich gegen die Oberfläche des ersten Elementes 4 bzw. des zweiten Elementes 5 erstreckt, ist dabei derart ausgebildet, dass im oberen Bereich zwischen der Profilschiene 3 und dem ersten Element 4 beziehungsweise dem zweiten Element 5 ein Zwischenraum 7 zur Aufnahme einer Dichtung entsteht. Die Dichtung kann beispielsweise eine Elastomer Rundschnur oder ein Streifen aus Gummimaterial oder ähnliches sein, wobei sich die Dichtung entlang des Zwischenraumes 7 in diesem erstreckt. Durch das Anordnen der Dichtung wird verhindert, dass Flüssigkeiten in den Bereich des Klemmschenkels 11 gelangen.

Der abgebogene Schenkel 31, welcher sich nach unten erstreckt, dient im wesentlichen als Anschlag für den Bolzen 22.

In einer alternativen Ausführungsform kann das Klemmelement 20 in dem Abschnitt, welcher über die Seitenschenkel 111 hervorsteht, einen insbesondere konischen Flansch 202 aufweisen. Aufgrund des abgebogenen Schenkels 31 entsteht auch im unteren Bereich ein Zwischenraum zwischen der Profilschiene 3 und dem ersten bzw. dem zweiten Element 4, 5. Der Durchmesser des Flansches 202 ist grösser als der Durchmesser des Klemmelementes 20. Der Flansch 202 ist dabei derart ausgebildet, dass dieser in den Zwischenraum zwischen Profilschiene 3 und dem ersten Element 4 bzw. dem zweiten Element 5 eingreifen kann. Dies ist vorteilhaft, denn dadurch kann verhindert werden, dass sich das erste Element 4 vom zweiten Element 5 entfernen kann. Dadurch, dass der Flansch 202 konisch ist, werden auch die Elemente 4 und 5 gegeneinander auf ihren Abstand verspannt.

Anstelle von Profilschienen 3 können auch die entsprechenden Seitenwände 41, 51 des ersten Elementes 4 bzw. des zweiten Elementes 5 mit einer entsprechenden Abstufung ausgestattet sein, so dass das Klemmelement 20 an dieser Abstufung anstehen kann. In diesem Ausführungsbeispiel könnte die Dichtung 7 dann zwischen der Unterseite 100 des Abdeckschenkels 10 und der entsprechenden Oberseite des ersten Elementes 4 bzw. des zweiten Elementes 5 anstehen.

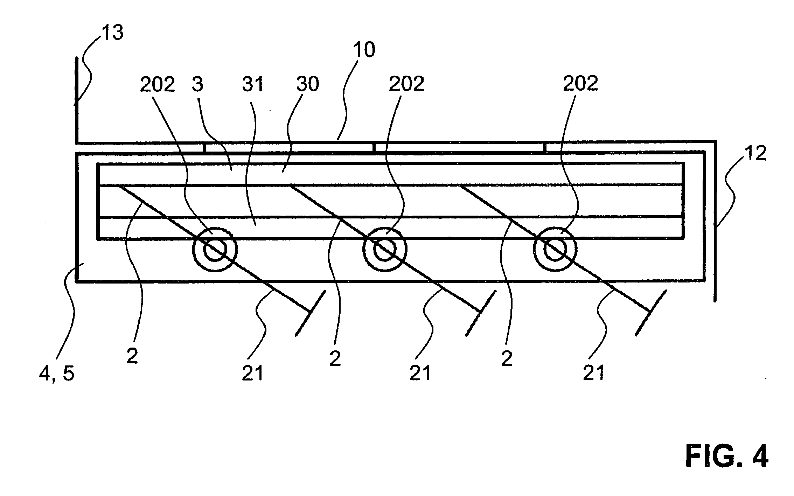

Die Figur 4 zeigt in einer schematischen Seitenansicht eine erfindungsgemässe Verbindungsvorrichtung. Insbesondere ist hier erkennbar, in welcher Richtung ein Werkzeug ansetzbar ist, nämlich in Verlängerung der Schraube 2, mit welchem Werkzeug der Benutzer die Verbindungsvorrichtung verspannen kann.

Es ist klar ersichtlich, dass eine vorteilhafte Ausführung durch die Bewegung der Flansche 202 relativ zur Schiene 3 erreicht wird. Dafür ist es nicht unbedingt nötig, wenn auch vorteilhaft, dass die Schiene horizontal angeordnet ist und die Verschiebungsachse entsprechend der Achse der Schraube 2 schräg von der Vorderseite der Kochgeräte 4, 5 (= vom vorderen Blendenschenkel 12) aus gesehen ansteigend verläuft.

Es ist genauso möglich, die Schienen 3 in diesem Sinne nach hinten abfallend zu befestigen und die Achse der Schrauben 2 horizontaler aus zugestalten, wobei im Extremfall der horizontalen Ausgestaltung das Anziehen mit einer einzigen langen Schraube 2 vonstatten gehen kann, die durch mehrere, beispielsweise drei Bolzen 22 hindurchstösst. Allerdings gehen dabei Einstellungsmöglichkeiten verloren.

Auf der anderen Seite ist es ebenfalls möglich und bevorzugter, dass die Schienen 3 nach vorne zum vorderen Blendenschenkel 12 hin abfallend angeordnet sind, um allfällig eindringendes Wasser im vorderen Bereich abtropfen zu lassen. Dann ist im Gegenzug der Winkel der Schrauben 2 eher etwas steiler. Grundsätzlich sind dann im vorderen Bereich die Längen der Seitenschenkel 11 länger und die Abstände der Nuten von der Unterseite 101 sind im vorderen Bereich grösser.

Prinzipiell wäre es auch möglich, einen einzigen Seitenschenkel 111 vorzusehen und die Spannschraube 2 asymmetrisch zu befestigen.

Vorzugsweise sind die Teile der erfindungsgemässen Verbindungsvorrichtung aus einem metallischen Werkstoff gefertigt. Für die Anwendung im Bereich von Grossküchen erweisen sich nicht-rostende Stähle als besonders vorteilhaft.

### Bezugszeichenliste

- 1: Verbindungselement
- 2: Spannelement
- 3: Profilschienen
- 4: erste Abdeckung/erster Kochapparat
- 5: zweite Abdeckung/zweiter Kochapparat
- 6: Befestigungsmittel
- 7: Dichtung
- 10: Abdeckschenkel
- 11: Klemmschenkel
- 12: vorderer Blendenschenkel
- 13: hinterer Blendenschenkel
- 14: Nut
- 20: Klemmelement
- 21: Spannschraube
- 22: Bolzen
- 41: Seitenwand
- 51: Seitenwand
- 100: Oberseite
- 101: Unterseite
- 110: Grundschenkel
- 111: Seitenschenkel
- 112: Zwischenraum
- 113: U-Führungsprofil
- 200: Öffnung
- 201: freies Ende
- 202: Flansch
- 212: U-Profil
- 221: U-Führungsprofil

## Patentansprüche

1. Verbindungsvorrichtung zum lösbaren Verbinden von zwei Elementen (4, 5) in Gestalt von Küchenabdeckungen mit Kochapparaten oder von Kochapparaten untereinander, mit einem Verbindungselement (1), umfassend einen Abdeckschenkel (10) geeignet zur Abdeckung der Oberflächen (40, 50) von zwei ausreichend nahe nebeneinander stehenden Elementen (4, 5), **dadurch gekennzeichnet, dass** das Verbindungselement (1) ferner einen Klemmschenkel (11) und ein Spannelement (2) zur Verspannung des Verbindungselementes (1) gegenüber dem ersten und dem zweiten Element (4, 5) umfasst, wobei das Spannelement (2) mindestens ein relativ zum Verbindungselement (1) bewegliches Klemmelement (20) umfasst, welches sowohl mit einem Klemmeingriffteil (3, 31) des ersten Elementes (4) und einem Klemmeingriffteil (3, 31) des zweiten Elementes (5) in Eingriff bringbar ist.

2. Verbindungsvorrichtung nach Anspruch 1, **dadurch gekennzeichnet, dass** zur Relativbewegung zwischen Klemmelement (20) und Verbindungselement (1) das Verbindungselement eine längliche Bahn (14) umfasst, die in einem Winkel (α) zu den Klemmeingriffteilen (3, 31) der beiden Elemente (4, 5) steht.

3. Verbindungsvorrichtung nach Anspruch 2, **dadurch gekennzeichnet, dass** der besagte Winkel (α) zwischen 25° und 65° ist, insbesondere zwischen 30° und 60°.

4. Verbindungsvorrichtung nach Anspruch 2 oder 3, **dadurch gekennzeichnet, dass** die längliche Bahn im Klemmschenkel (11) in einem Winkel (α) zur Oberfläche des Abdeckschenkels (10) steht und die Klemmeingriffteilen (3, 31) parallel zur Oberfläche des Abdeckschenkels (10) ausgerichtet sind.

5. Verbindungsvorrichtung nach Anspruch 2, 3 oder 4, **dadurch gekennzeichnet, dass** das bewegliche Klemmelement (20) mit einem Schraubenmittel (21) stufenlos entlang der länglichen Bahn (14) bewegbar ist.

6. Verbindungsvorrichtung nach einem der vorhergehenden Ansprüche, **dadurch gekennzeichnet, dass** die Klemmeingriffteile Profilschienen (3) sind, welche am erst bzw. am zweiten Element (4, 5) befestigt sind.

7. Verbindungsvorrichtung nach einem der vorhergehenden Ansprüche, **dadurch gekennzeichnet, dass** das Klemmelement (20) über zwei gegenüberliegende freie Enden (201) verfügt, die seitlich über den oder die Seitenschenkel (111) hinausstehen und mit den Klemmeingriffteilen (3, 31) der beiden Elemente (4, 5) in Eingriff bringbar sind.

8. Verbindungsvorrichtung nach Anspruch 7, **dadurch gekennzeichnet, dass** die freien Enden (201) konisch sich öffnende Flansche sind, die jeweils die zugeordneten Klemmeingriffteile (3, 31) hintergreifen können, so dass bei einer Bewegung der freien Enden (201) entlang der länglichen Bahn (14) eine Verspannung auch der beiden Elemente (4, 5) gegeneinander erreichbar ist.

9. Verbindungsvorrichtung nach einem der vorhergehenden Ansprüche, **dadurch gekennzeichnet, dass** die längliche Bahn durch eine Nut oder Langloch (22) im Klemmschenkel (11) gebildet ist.

10. Verbindungsvorrichtung nach einem der vorhergehenden Ansprüche, **dadurch gekennzeichnet, dass** der Klemmschenkel (11) im wesentlichen einen Grundschenkel (110) und zwei senkrecht vom Grundschenkel (110) abstehende Seitenschenkel (111) umfasst, wobei die längliche Bahn als Nut (22) jeweils in den abstehenden Seitenschenkel (111) angeordnet ist.

11. Verbindungsvorrichtung nach Anspruch 9, **dadurch gekennzeichnet, dass** zwischen dem ersten bzw. dem zweiten Element (4, 5) und dem Abdeckschenkel (10) bzw. dem Klemmschenkel (11) eine Dichtung angeordnet ist, insbesondere in einem zwischen jeder Profilschiene (3) und dem Abdeckschenkel (10) gebildeten Hohlraum (7).

## Claims

1. Connecting device for releasably connecting two elements (4, 5) in the form of kitchen panels to cooking appliances or of cooking appliances to one another, having a connecting element (1) comprising a covering leg (10) suitable for covering the surfaces (40, 50) of two elements (4, 5) located sufficiently closely one beside the other, **characterized in that** the connecting element (1) further comprises a clamping leg (11) and a tensioning element (2) for bracing the connecting element (1) with respect to the first and second elements (4, 5), wherein the tensioning element (2) comprises at least one clamping element (20) which can be moved relative to the connecting element (1) and can be brought into engagement both with a clamping engagement part (3, 31) of the first element (4) and with a clamping engagement part (3, 31) of the second element (5).

2. Connecting device according to Claim 1, **characterized in that**, for relative movement between the clamping element (20) and the connecting element (1), the connecting element comprises an elongate track (14) which is at an angle (α) to the clamping engagement parts (3, 31) of the two elements (4, 5).

3. Connecting device according to Claim 2, **characterized in that** said angle (α) is between 25° and 65°, in particular between 30° and 60°.

4. Connecting device according to Claim 2 or 3, **characterized in that** the elongate track in the clamping leg (11) is at an angle (α) to the surface of the covering leg (10), and the clamping engagement parts (3, 31) are aligned parallel to the surface of the covering leg (10).

5. Connecting device according to Claim 2, 3 or 4, **characterized in that** the moveable clamping element (20) can be moved along the elongate track (14) in a stepless manner by way of a screw means (21).

6. Connecting device according to one of the preceding claims, **characterized in that** the clamping engagement parts are profile rails (3) which are fastened to the first and/or second element (4, 5).

7. Connecting device according to one of the preceding claims, **characterized in that** the clamping element (20) has two opposite free ends (201), which protrude laterally beyond the side leg(s) (111) and can be brought into engagement with the clamping engagement parts (3, 31) of the two elements (4, 5).

8. Connecting device according to Claim 7, **characterized in that** the free ends (201) are conically opening flanges which can each engage behind the associated clamping engagement parts (3, 31), such that, when the free ends (201) move along the elongate track (14), the two elements (4, 5) can also be braced in relation to one another.

9. Connecting device according to one of the preceding claims, **characterized in that** the elongate track is formed by a groove or slot (22) in the clamping leg (11).

10. Connecting device according to one of the preceding claims, **characterized in that** the clamping leg (11) comprises substantially a base leg (110) and two side legs (111) protruding perpendicularly from the base leg (110), wherein the elongate track is arranged as a groove (22) in each case in the protruding side legs (111).

11. Connecting device according to Claim 9, **characterized in that** a seal is arranged between the first or second element (4, 5) and the covering leg (10) or clamping leg (11), in particular in a cavity (7) formed between each profile rail (3) and the covering leg (10).

## Revendications

1. Dispositif de liaison destiné à la liaison amovible l'un à l'autre de deux éléments (4, 5) sous la forme de couvercles de cuisine dotés d'appareils de cuisson ou sous la forme d'appareils de cuisson, avec un élément de liaison (1), comprenant une branche de couverture (10) apte à recouvrir les surfaces (40, 50) de deux éléments placés suffisamment près l'un à côté de l'autre (4, 5), **caractérisé en ce que** l'élément de liaison (1) comprend en outre une branche de serrage (11) et un élément de blocage (2) pour bloquer l'élément de liaison (1) par rapport au premier et au deuxième éléments (4, 5), dans lequel l'élément de blocage (2) comprend au moins un élément de serrage (20) mobile par rapport à l'élément de liaison (1), qui peut être mis en prise aussi bien avec une pièce de prise de serrage (3, 31) du premier élément (4) qu'avec une pièce de prise de serrage (3, 31) du deuxième élément (5).

2. Dispositif de liaison selon la revendication 1, **caractérisé en ce que**, pour le mouvement relatif entre l'élément de serrage (20) et l'élément de liaison (1), l'élément de liaison comprend une piste allongée (14), qui est inclinée d'un angle (α) par rapport aux pièces de prise de serrage (3, 31) des deux éléments (4, 5).

3. Dispositif de liaison selon la revendication 2, **caractérisé en ce que** ledit angle (α) est compris entre 25° et 65°, en particulier entre 30° et 60°.

4. Dispositif de liaison selon la revendication 2 ou 3, **caractérisé en ce que** la piste allongée dans la branche de serrage (11) est inclinée d'un angle (α) par rapport à la surface de la branche de couverture (10) et les pièces de prise de serrage (3, 31) sont orientées parallèlement à la surface de la branche de couverture (10).

5. Dispositif de liaison selon la revendication 2, 3 ou 4, **caractérisé en ce que** l'élément de serrage mobile (20) peut être déplacé en continu le long de la piste allongée (14) à l'aide d'un moyen à vis (21).

6. Dispositif de liaison selon l'une quelconque des revendications précédentes, **caractérisé en ce que** les pièces de prise de serrage sont des rails profilés (3), qui sont fixés au premier ou au deuxième élément (4, 5).

7. Dispositif de liaison selon l'une quelconque des revendications précédentes, **caractérisé en ce que** l'élément de serrage (20) présente deux extrémités libres opposées (201), qui dépassent latéralement au-delà de la ou des branche(s) latérale(s) (111) et qui peuvent être mises en prise avec les pièces de prise de serrage (3, 31) des deux éléments (4, 5).

8. Dispositif de liaison selon la revendication 7, **caractérisé en ce que** les deux extrémités libres (201) sont des brides s'ouvrant sous forme conique, qui peuvent s'accrocher respectivement derrière les pièces de prise de serrage associées (3, 31), de telle manière que, lors d'un mouvement des extrémités libres (201) le long de la piste allongée (14), on puisse aussi atteindre un blocage des deux éléments (4, 5) l'un contre l'autre.

9. Dispositif de liaison selon l'une quelconque des revendications précédentes, **caractérisé en ce que** la piste allongée est formée par une rainure ou un trou oblong (22) dans la branche de serrage (11).

10. Dispositif de liaison selon l'une quelconque des revendications précédentes, **caractérisé en ce que** la branche de serrage (11) comprend essentiellement une branche de fond (110) et deux branches latérales (111) dressées perpendiculairement à partir de la branche de fond (110), dans lequel la piste allongée est disposée sous la forme d'une rainure (22) chaque fois dans la branche latérale dressée (111).

11. Dispositif de liaison selon la revendication 9, **caractérisé en ce qu'**un joint d'étanchéité est disposé entre le premier ou le deuxième élément (4, 5) et la branche de couverture (10) ou la branche de serrage (11), en particulier dans une cavité (7) formée entre chaque rail profilé (3) et la branche de couverture (10).
